# EUROPEAN PATENT APPLICATION

(11) **EP 4 800 887 A1**
(43) Date of publication of application: **02.09.2026**
(21) Application number: 25217190.5
(22) Date of filing: 20.11.2025
(51) Int. Cl.: H02K 1/14, H02K 1/16

(54) **STATOR OF MOTOR**

(30) Priority: 28.02.2025 KR 20250026926
(71) Applicant: LG Electronics Inc., Yeongdeungpo-gu Seoul 07336 (KR)
(72) Inventor: HWANG, Hongsik, Seoul 07796 (KR); YU, Kyungmo, Seoul 07796 (KR); JEONG, Gyujong, Seoul 07796 (KR); CHO, Jeonghyun, Seoul 07796 (KR); HA, Kyungho, Seoul 07796 (KR); KIM, Jaeho, Seoul 07796 (KR)
(74) Representative: Vossius & Partner Patentanwälte Rechtsanwälte mbB

(57) **Abstract**

Provided is a stator of a motor. The stator of the motor includes engaged portions in which two adjacent unit yokes are engaged with each other in a folding-type stator core, and each of the engaged portions may include a contact surface in contact with engaged portions of two adjacent unit yokes, and at least one non-contact surface arranged at a height smaller than a height of the contact surface in a circumferential direction not to be in contact with the engaged portion of another unit yoke adjacent in the circumferential direction. Thus, since the at least one non-contact surface is arranged in each of the engaged portions in which two adjacent unit yokes among unit yokes of the stator core configured as a folding-type core are engaged with each other, internal stress that may occur when the two adjacent engaged portions come into close contact with each other while the two adjacent unit yokes are being folded may be attenuated and iron loss caused by the internal stress in the two adjacent unit yokes may be suppressed, thereby improving motor efficiency and motor performance.

## Description

### BACKGROUND

### 1. Field

The present disclosure relates to a stator of a motor.

### 2. Description of the Related Art

In general, a stator functions to generate magnetic force by magnetizing an iron core in a motor, and produces rotational force through interaction with a rotor. To generate such magnetic force, a coil is wound around the iron core to generate a magnetic field. Accordingly, most stators need a structure that allows more coils to be filled into slots of a core to increase efficiency or power density.

The core is configured by stacking a plurality of electrical steel sheets to reduce iron loss. Due to this restraint, significant technical efforts are needed to increase a space factor which is a ratio of a cross-sectional area of a coil to a slot area.

In the related art, a core (hereinafter referred to as a "solid core') formed integrally as a stator core of a motor has been used. This has an advantage of excellent reliability in a manufacturing process. However, since there is a need to secure a space for a nozzle to perform winding operations, an effective slot area in which the stator core is wound is reduced, which causes a decrease in motor efficiency.

In view of this, there have been proposed a core (hereinafter referred to as a 'segmented core') such that a stator core constituting a stator of a motor is divided, a stator coil is wound thereon, and then, the stator core is assembled, or a core (hereinafter referred to as 'a folding-type core') such that a stator core is unfolded in a longitudinal direction, a stator coil is wound thereon, and then, the stator core is rolled to have a cylindrical shape.

Since the folding-type core is unfolded in a straight form before rolling, coil winding operations may be easily performed, thereby increasing a space factor of a coil. Accordingly, the folding-type core may significantly improve a copper loss reduction effect.

Patent document 1 (Chinese Laid-open Patent Publication CN 114902535 A) discloses a folding-type core such that a stator core having unit cores connected to each other is rolled into a circular shape to be assembled, and Patent Document 2 (U.S. Laid-open Patent Publication No. US 2024/0213827 A1) discloses a folding-type core in which a stator core having unit yokes connected to each other is rolled into a helical shape to be assembled.

However, in the case of the folding-type core in the related art as described above, since internal stress increases between adjacent unit cores in a process of rolling a stator core, an iron loss may occur, thus resulting in deterioration in motor efficiency.

In addition, in the folding-type core in the related art, although a contact area between adjacent unit cores may be enlarged to reduce internal stress therebetween, this may reduce an effective slot area in a stator core, thereby reducing a space factor of a stator coil and deteriorate motor efficiency.

### SUMMARY

An objective of the present disclosure is to provide a stator of a motor, the stator capable of enhancing motor efficiency by reducing iron loss that occurs between unit cores of a folding-type core.

Another objective of the present disclosure is to provide a stator of a motor, the stator capable of reducing internal stress generated when a stator core is rolled in a folding-type core to reduce iron loss that occur between unit cores.

Still another objective of the present disclosure is to provide a stator of a motor, the stator capable of increasing elastic force between adjacent unit cores in a folding-type core to reduce internal stress generated when a stator core is rolled.

In order to achieve these and other advantages and in accordance with the purpose of this specification, as embodied and broadly described herein, there is provided a stator of a motor, the stator including a stator core formed in an annular shape by integrally connecting a plurality of unit yokes arranged in a row. Each of the plurality of unit yokes may include connecting portions located on both circumferential ends to be integrally connected to adjacent unit yokes, hollow portions recessed into inner circumferential sides of the respective connecting portions in a circumferential direction, and engaged portions arranged on inner circumferential sides of the respective hollow portions and engaged with the adjacent unit yokes. Each of the engaged portions may include a contact surface in contact with an engaged portion of another unit yoke adjacent in the circumferential direction; and at least one non-contact surface arranged to be lower than the contact surface in the circumferential direction not to be in contact with the engaged portion of the another unit yoke adjacent in the circumferential direction. Thus, since the at least one non-contact surface is arranged in each of the engaged portions in which two adjacent unit yokes among unit yokes of the stator core configured as a folding-type core are engaged with each other, internal stress that may occur when the two adjacent engaged portions come into close contact with each other while the two adjacent unit yokes are being folded may be attenuated and iron loss caused by the internal stress in the two adjacent unit yokes may be suppressed, thereby improving motor efficiency and motor performance.

As one example, each of the engaged portions may include a first contact section arranged on an outer circumferential side, a second contact section arranged on a further inner circumferential side relative to the first contact section, and a partial contact section arranged between the first contact section and the second contact section. A radial width of the partial contact section may be equal to or greater than a radial width of the first contact section or a radial width of the second contact section.

For example, the radial width of the partial contact section may be smaller than or equal to a sum of the radial width of the first contact section and the radial width of the second contact section. This may minimize a reduction in a magnetic path area in each of the plurality of unit yokes while suppressing iron loss caused by internal stress in each of the plurality of unit yokes, thereby improving motor efficiency and motor performance.

As another example, each of the engaged portions may include a first contact section arranged on an outer circumferential side, a second contact section arranged on a further inner circumferential side relative to the first contact section, and a partial contact section arranged between the first contact section and the second contact section. The at least one non-contact surface may be arranged within a radial range of the partial contact section.

For example, the partial contact section may include at least one non-contact groove circumferentially recessed into each of the engaged portions by a preset depth to constitute the at least one non-contact surface.

In detail, the at least one non-contact groove may have a radial width equal to a circumferential width thereof. This allows to easily machine the partial contact section.

In detail, a plurality of non-contact grooves may have a radial width smaller than a circumferential width thereof. This may improve elastic force in the partial contact section to thereby effective suppress iron loss caused by internal stress in each of the plurality of unit yokes. Thus, motor efficiency and motor performance may be enhanced.

In detail, the at least one non-contact groove may include a plurality of first side surfaces arranged on both sides to be parallel to each other in a radial direction, and a second side surface connecting between the plurality of first side surfaces. The second side surface may be formed as a straight line or a curved surface.

In detail, the at least one non-contact groove may have a hemispherical shape, respectively. This may alleviate a bottleneck of magnetic flux on the non-contact surface, thereby improving motor efficiency, and further improving reliability of die and/or core when the at least one non-contact groove is machined using die punching.

In detail, the partial contact section may be formed to be symmetrical in a radial direction with respect to a virtual circle passing through a radial center of the partial contact section. Accordingly, the partial contact section including the at least one non-contact groove and a contact protrusion may be easily machined, and since a magnetic path area between each of the unit yokes are uniformly formed in the partial contact section, magnetic flux saturation in each of the unit yokes may be suppressed.

In detail, the partial contact section may be formed to be asymmetrical in a radial direction with respect to a virtual circle passing through a radial center of the partial contact section. This may increase elastic force in a portion in which great internal stress occurs, thereby reducing overall iron loss while maintaining a same magnetic path area. In correspondence with this, motor efficiency may be enhanced.

As still another example, each of the engaged portions may include a first contact section arranged on an outer circumferential side, a second contact section arranged on a further inner circumferential side relative to the first contact section, and a partial contact section arranged between the first contact section and the second contact section. The partial contact section may include a plurality of non-contact grooves and at least one contact protrusion. The plurality of non-contact grooves may be circumferentially recessed into each of the engaged portions by a preset depth to constitute the at least one non-contact surface. The at least one contact protrusion may radially protrude toward the engaged portion of the another unit yoke between the plurality of non-contact grooves to constitute the contact surface. This may reduce internal stress generated in the engaged portions and reduce overall iron loss to thereby improve motor efficiency.

For example, among the plurality of non-contact grooves, a non-contact groove located on an outer circumferential side of each of the plurality of unit yokes with respect to a virtual circle passing through a radial center of the partial contact section may have a radial width and/or a circumferential width greater than a radial width and/or a circumferential width of a non-contact groove located on an inner circumferential side of each of the plurality of unit yokes.

Alternatively, the plurality of non-contact grooves may each have an identical shape. The at least one contact protrusion may have a shape and a specification identical to the shape and a specification of the plurality of non-contact grooves.

Alternatively, the at least one contact protrusion may include a plurality of contact protrusions. The plurality of contact protrusions may each have an identical shape.

In addition, a radial width and a circumferential width of the plurality of non-contact grooves may be equal to a radial width and a circumferential width of the at least one contact protrusion.

As still another example, a radial width of at least one non-contact surface among the at least one non-contact surface may be smaller than or equal to a radial width of each of the hollow portions.

### BRIEF DESCRIPTION OF THE DRAWINGS

The above and other aspects, features and other advantages of the present disclosure will be more clearly understood from the following detailed description taken in conjunction with the accompanying drawings, in which:
FIG. 1 is a perspective view illustrating a stator according to the present disclosure;
FIG. 2 is a planar view of the stator of FIG. 1;
FIG. 3 is an exploded perspective view illustrating a part of a stator core in the stator according to the present disclosure;
FIG. 4 is a planar view illustrating a state of rolling the stator core of FIG. 3;
FIG. 5 is a cross-sectional view taken along line "V-V" of FIG. 4;
FIG. 6 is a simulation drawing showing a result of comparing an internal stress distribution in an engaged portion of the stator core according to this embodiment to an internal stress distribution in the related art;
FIG. 7 shows a table in which simulation results of FIG. 6 are arranged;
FIGS. 8 and 9 are schematic diagrams illustrating other embodiments of the engaged portion;
FIG. 10 is a schematic diagram illustrating still another embodiment of the engaged portion;
FIGS. 11 and 12 are schematic diagrams illustrating still another embodiment of the engaged portion; and
FIG. 13 is a schematic diagram illustrating still another embodiment of the engaged portion.

### DETAILED DESCRIPTION

Hereinafter, a stator of a motor according to the present disclosure is described in detail in accordance with one embodiment disclosed herein. As described above, with respect to the stator of the motor, in addition to a solid core configured such that a single stator core is configured to have an annular shape and a stator coil is wound thereon, a segmented core and a folding-type core configured such that a stator core including a plurality of unit cores is unfolded in a linear form, and a stator coil is wound thereon, and then, rolled to have an annular shape are known. This embodiment may be applied to a stator core configured as the folding-type core.

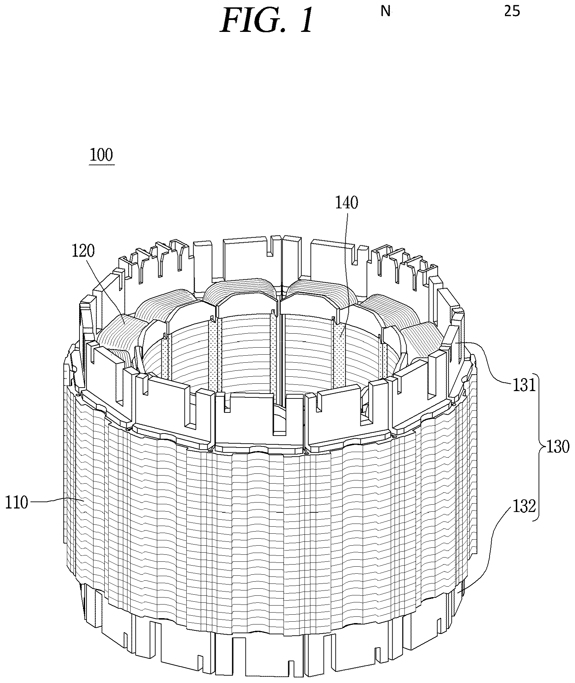

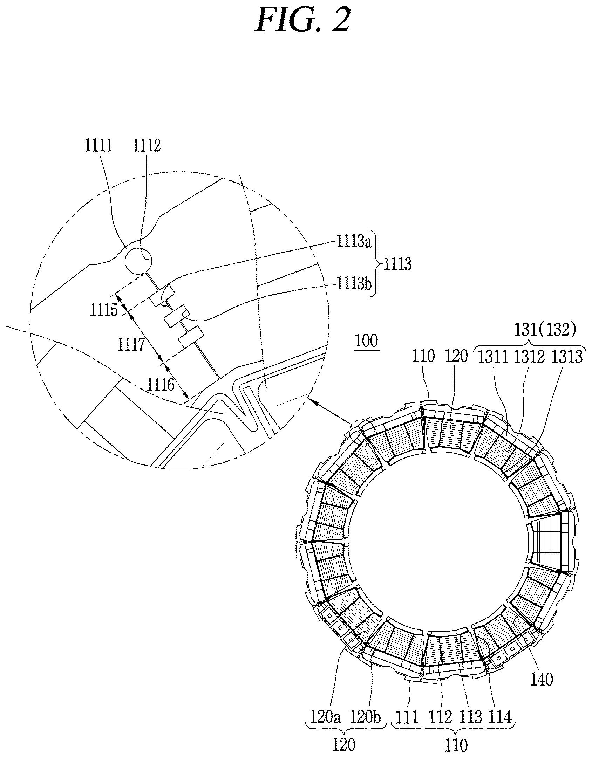

FIG. 1 is a perspective view illustrating the stator according to the present disclosure. FIG. 2 is a planar view of the stator of FIG. 1.

Referring to FIGS. 1 and 2, a stator 100 of the motor according to this embodiment may include a stator core 110, a stator coil 120, an insulator 130, and an insulating sheet 140. The stator core 110 is a member configured to form a magnetic path. The stator coil 120 is a member configured to allow the magnetic path to be formed in the stator core 110. The insulator 130 is a member configured to insulate an axial side surface of the stator core 110. The insulating sheet 140 is a member configured to insulate an inner circumferential surface of the stator core 110.

The stator core 110 according to this embodiment may be formed in an annular shape in which a plurality of steel plates are stacked. The stator cores 110 may be constituted as a folding-type core as described above.

For example, the stator core 110 may be integrally formed by connecting a plurality of unit cores 110a each other. In other words, the stator core 110 constituting the folding-type core may include the plurality of unit cores 110a connected to each other in a longitudinal direction and arranged in a row, and unit cores 110a and 110a located at both ends may be separated from each other, and then, assembled later. Accordingly, the folding-type core may be manufactured in a linear form, and then, formed into an annular shape.

In detail, the plurality of unit cores 110a may each include a unit yoke 111, a tooth 112, a shoe 113, and a slot 114. The unit yoke 111, the tooth 112, and the shoe 113 may be included in each unit core 110a, and the slot 114 may be arranged between two adjacent unit cores 110a and 110a. Accordingly, in the folding-type core, the unit yoke 111, the tooth 112, and the shoe 113 may form a fixed cross-sectional area of the stator core 110, and the slot 114 may form a variable cross-sectional area of the stator core 110.

The unit yoke 111 may be formed in an arc shape. For example, an outer circumferential surface of the unit yoke 111 may be formed in an uneven circular arc shape, and an inner circumferential surface of the unit yoke 111 may be formed as a straight surface perpendicular to a circumferential side surface of the tooth 112 which is to be described later. Accordingly, when being unfolded, the inner circumferential surface of the unit yoke 111 may form a straight line with an inner circumferential surface of an adjacent unit yoke 111.

At least a part of both circumferential ends of the unit yoke 111 may be arranged to be inclined. For example, a connecting portion 1111 integrally connected to an end portion of an adjacent unit yoke 111 may be arranged at both circumferential end portions of the unit yoke 111, and a hollow portion 1112 may be arranged on an inner circumferential side of the connecting portion 1111, the hollow portion 1112 being configured to function as a reference for rolling when unit yokes 111 of two adjacent unit cores 110a and 110a are rolled (or bent). In addition, an engagement portion 1113 in which the unit yokes 111 of the two adjacent unit cores 110a and 110a are engaged with each other may be arranged on an inner circumferential side of the hollow portion 1112. Accordingly, in the plurality of unit cores 110a, as connecting portions 1111 are rolled (bent) with reference to hollow portions 1112, respectively, engaged portions 1113 and 1113 of the two adjacent unit yokes 111 and 111 come into close contact with each other to thereby form the stator core 110 having an annular shape.

The connecting portion 1111 has a circular arc shape to connects two adjacent unit yokes 111 to each other, and a concave portion 1111a radially recessed may be arranged on an outer circumferential side of the connecting portion 1111 in a radial direction. Accordingly, when the unit yoke 111 is bent (rolled), the connecting portion 1111 of the unit yoke 111 may be prevented from protruding outside outer circumferential surfaces of yokes forming a circular shape.

The hollow portions 1112 may be formed as grooves circumferentially recessed into end portions of two adjacent unit yokes 111, respectively, to be connected to the connecting portions 1111 and spaced apart from each other between the two adjacent unit yokes 111. Accordingly, when bending (rolling) the unit cores 110a, the bending (rolling) operation may be performed smoothly.

The engaged portions 1113 may be connected to the hollow portions 1112 to be inclined such that a gap between the engaged portions 1113 at both sides increases from an outer circumferential surface toward an inner circumferential surface of the unit yoke 111. Accordingly, when the unit yokes 111 are rolled, an engaged portion 1113 of a unit yoke 111 at one side may be brought into contact with an engaged portion 1113 of an adjacent unit yoke 111 to secure a magnetic path area.

In this case, the engaged portions 1113 are defined as portions between inner circumferential ends of the hollow portions 1112 and inner circumferential surfaces of the unit yokes 111. The engaged portions 1113 may be arranged to correspond to adjacent engaged portions 1113. In other words, contact surfaces 1113a to be described later may be arranged to correspond to each other, and non-contact surfaces 1113b may be arranged to correspond to each other. Accordingly, a magnetic path area in the engaged portions 1113 may be secured, while internal stress generated in the engaged portions 1113 may be effectively attenuated.

The engaged portions 1113 may be unevenly arranged along a radial direction. In other words, the engaged portions 1113 may each include the contact surfaces 1113a and the non-contact surfaces 1113b. The contact surfaces 1113a are portions that come into contact with the engaged portion 1113 of the adjacent unit yoke 111. The non-contact surfaces 1113b are portions that are not in contact with the engaged portion 1113 of the adjacent unit yoke 111. Accordingly, internal stress generated during rolling may be elastically absorbed, thereby suppressing iron loss. The engaged portion1113 will be described again later.

The tooth 112 may have a rectangular shape. The tooth 112 may extend inwardly in a radial direction from a center of an inner circumferential surface of a corresponding unit yoke 111. Accordingly, a circumferential width of the tooth 112 may have a length smaller than a length between both ends of the corresponding unit yoke 111 to form the slot 114 defining a coil winding space between adjacent teeth 112.

The tooth 112 may have a same width along a longitudinal direction. In other words, both circumferential side surfaces of the tooth 112 may be each arranged to be perpendicular to the inner circumferential surface of the unit yoke 111. Accordingly, volume of the slot 114 may be formed widely as possible, thereby improving a space factor of the stator coil 120.

The shoe 113 may have a circular arc shape. For example, the shoe 113 may extend from an inner side end toward both circumferential sides of the tooth 112, and a circumferential length of the shoe 113 may be configured to be smaller than a circumferential length of the corresponding unit yoke 111. In other words, the shoe 113 may be spaced apart from an adjacent shoe 113 by a preset space. Accordingly, as a winding nozzle is drawn in or out at an inner circumferential side of the stator core 110, the stator coil 120 may be wound on the stator core 110.

The shoe 113 may have a same width along the circumferential direction, or may have a thickness reduced from a center toward both circumferential ends thereof. In the former case, a resistance in a magnetic path at both ends of the shoe 113 may be lowered. In the latter case, volume of the slot 114 may be expanded to increase a space factor of the stator coil 120. This embodiment shows the latter case, that is, an example in which the shoe 113 has a thickness reduced from a circumferential center toward both circumferential ends thereof.

The slot 114 is a space in which the stator coil 120 is wound, and may be arranged between two adjacent unit cores 110a and 110a. In other words, the slot 114 may be defined between unit cores 110a adjacent to each other in the circumferential direction by unit yokes 111, teeth 112 and shoes 113 facing each other, respectively. Accordingly, an outer circumferential surface and both circumferential side surfaces of the slot 114 are blocked, whereas an opening (no reference numeral) by which shoes 113 at both sides are spaced apart from each other is arranged at the inner circumferential side of the slot 114 to allow a winding nozzle to be drawn in or out.

Referring to FIGS. 1 and 2, the stator coil 120 according to this embodiment may be wound on the tooth 112 of the stator core 110 and accommodated in the slot 114. For example, the stator coil 120 is inserted into each of U, V, and W three-phase positions of a power terminal portion (no reference numeral) through winding nozzles of a winding machine (not shown) arranged at constant intervals in a stacking direction (hereinafter, an axial direction) of the stator core 110. Then, the respective winding nozzles are moved simultaneously and repeatedly in horizontal and vertical directions to wind the stator coil 120 around the tooth 112. Then, the stator coil 120 is wound on three teeth 112, and the stator core 110 is rotated by 180 degrees. Then, the winding nozzles are moved horizontally by spacings of three slots 114, and then, the stator core 110 is rotated again by 180 degrees in an opposite direction. Then, the winding nozzles are moved toward the opening of the slot 114 and the winding operation described above is repeated. Then, the stator coil 120 is cut while being inserted into the U, V, and W three-phase positions of a neutral point. Accordingly, the stator coil 120 may be wound up to a space occupied by the winding nozzles to thereby improve a space factor of the stator coil 120. This may not only improve motor efficiency, but also allow application of an aluminum coil while maintaining motor efficiency at a level equivalent to that of a motor in the related art. In addition, since the stator coil 120 has a structure of being wound continuously without a wiring component, a plurality of winding nozzles may be used. Thus, a manufacturing cost may be reduced while productivity is enhanced.

Referring to FIGS. 1 and 2, the insulator 130 according to this embodiment may include first insulators 131 and second insulators 132. The first insulators 131 are insulators arranged on one axial side, and the second insulator is 132 are insulators arranged on another axial side. The first insulators 131 and the second insulators 132 are configured almost identically to each other. Thus, hereinafter, a description will be mainly given of the first insulators 131.

The first insulators 131 may each include a first yoke insulating portion 1311, a first teeth insulating portion 1312, and a first shoe insulating portion 1313. The first yoke insulating portion 1311 insulates between the unit yoke 111 of the stator core 110 and the stator coil 120. The first teeth insulating portion 1312 insulates between the tooth 112 of the stator core 110 and the stator coil 120. The first shoe insulating portion 1313 insulates between the shoe 113 of the stator core 110 and the stator coil 120. Accordingly, when projected in an axial direction, the first yoke insulating portion 1311 may be formed identically or similarly to one axial side surface of the unit yoke 111, the first teeth insulating portion 1312 may be formed identically or similarly to one axial side surface of the teeth 112, and the first shoe insulating portion 1313 may be formed identically or similarly to one axial side surface of the shoe 113.

Referring to FIGS. 1 and 2, the insulating sheet 140 according to this embodiment may have a shape corresponding to or almost corresponding to an inner circumferential surface of the stator core 110. In other words, the insulating sheet 140 may be configured as individual pieces to be inserted into slots 114, respectively, or like the stator core 110 configured as a folding-type core, arranged longitudinally in a row to be inserted into each slot 114 as a whole. In the former case, a space factor of the stator coil 120 may be increased by optimizing a support structure of the insulating sheet 140. In the latter case, assembling property of the insulating sheet 140 may be enhanced, thereby reducing a manufacturing cost. This embodiment shows an example in which the insulating sheet 140 according to the latter case is applied.

For example, when the stator core 110 is unfolded, the insulating sheet 140 may be arranged to be bent unevenly along a longitudinal direction of the insulating sheet 140 to correspond to inner circumferential surfaces of unit yokes 111 constituting an inner circumferential surface of the stator core 110, circumferential side surfaces of teeth 112, and inner circumferential surfaces of shoes 113. However, when the stator core 110 is rolled, a part of the insulating sheet 140 may be cut out to be inserted between two adjacent stator coils 120a and 120b (e.g., coil bundles) in a corresponding slot 114. Accordingly, when viewed in such a state that the stator core 110 is unfolded, the insulating sheet 140 may be configured as one insulating sheet 140 like the stator core 110, but when viewed in such a state that the stator core 110 is rolled, the insulating sheet 140 may be configured as a plurality of unit insulating sheets (no reference numeral) corresponding in number to the unit cores 110a constituting the stator core 110.

The stator according to this embodiment as described above may be assembled as described below.

That is, when the plurality of unit cores 110a constituting the stator core 110 are linearly unfolded, the first insulators 131 and the second insulators 132 are inserted and coupled into both axial sides of the stator core 110, respectively. In this case, as described above, the first insulators 131 and the second insulators 132 may be pre-assembled on the both axial sides of the stator core 110 by performing insert molding.

Then, the insulating sheet 140 is inserted and coupled into the inner circumferential surface of the stator core 110. In this case, the insulating sheet 140 is positioned between the first insulators 131 and the second insulators 132. At this time, an insulating sheet support portion (no reference numeral) may be arranged on each of the first insulator 131 and the second insulator 132 to support both ends of the insulating sheet 140 in an axial direction.

Then, when the stator core 110, the first and second insulators 131 and 132 at both sides thereof, and the insulating sheet 140 are assembled with each other, the winding nozzles described above are inserted between teeth 112 of two adjacent unit cores 110a and 110a facing each other to thereby wind the stator coil 120 on each tooth 112.

Then, in the stator core 110 which is linearly unfolded, the two adjacent unit cores 110a and 110a are folded and rolled with reference to the hollow portion 1112, respectively, to form the stator core 110 in an annular shape. At this time, as a portion where the two adjacent unit cores 110a are engaged with each other, that is, an engaged portion 1113 arranged at a circumferential end portion of the unit yoke 111 is brought into close contact with an engaged portion 1113 of an adjacent unit yoke 111, internal stress may occur. This internal stress may increase iron loss in the stator core 110, thus reducing motor efficiency.

Accordingly, in this embodiment, in the stator core 110 configured as a folding-type core, an engaged portion 1113 is provided at both ends of the unit yoke 111 constituting a unit core of the stator core 110 and, in addition to the contact surfaces 1113a, the non-contact surfaces 1113b may be arranged on the engaged portion 1113 as described above. Thus, internal stress between two adjacent engaged portions 1113 and 1113 which occurs when the unit yoke 111 is rolled (or bent) may be suppressed as possible. This may reduce iron loss that may occur due to the internal stress in the stator core 110, thereby increasing motor efficiency. According to this embodiment, the engaged portion 1113 may be formed such that two adjacent engaged portions 1113 and 1113 facing each other in a circumferential direction are arranged symmetrically to each other. Therefore, hereinafter, a description will be mainly given of one engaged portion 1113, and this will identically apply to another engaged portion 1113.

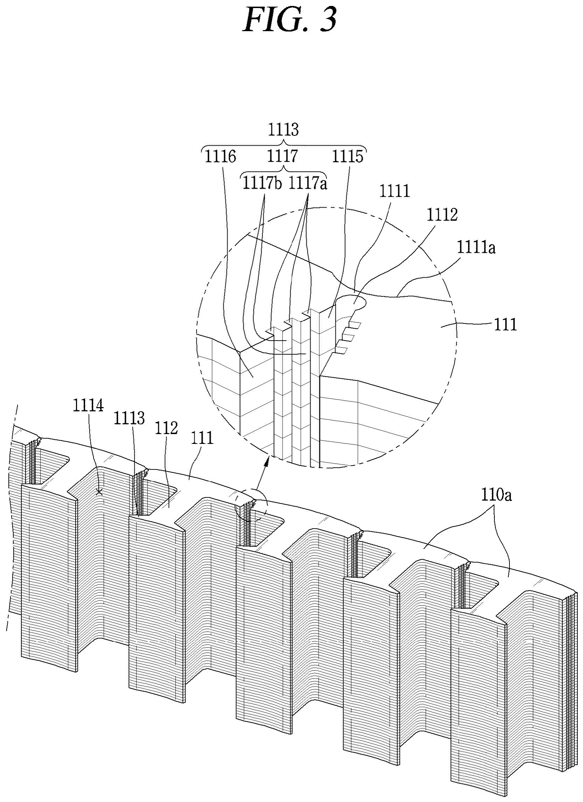

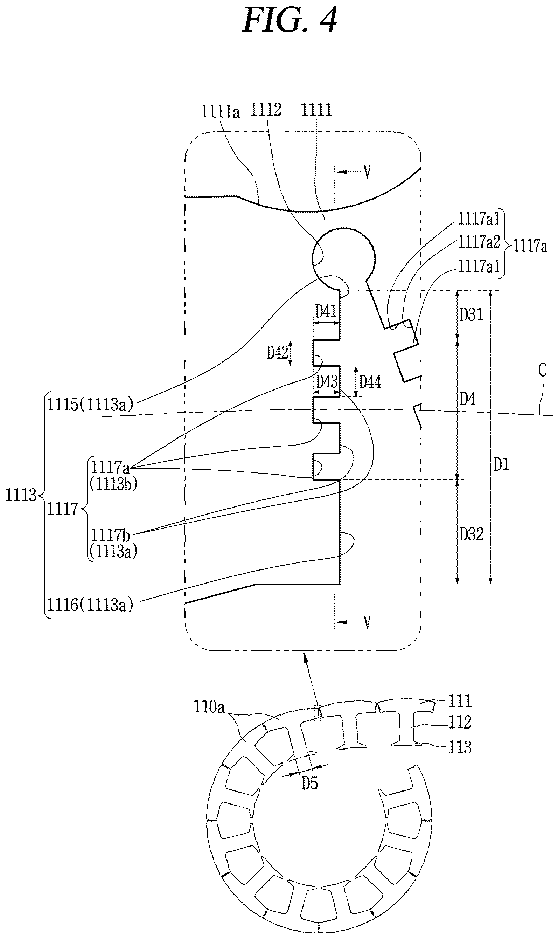

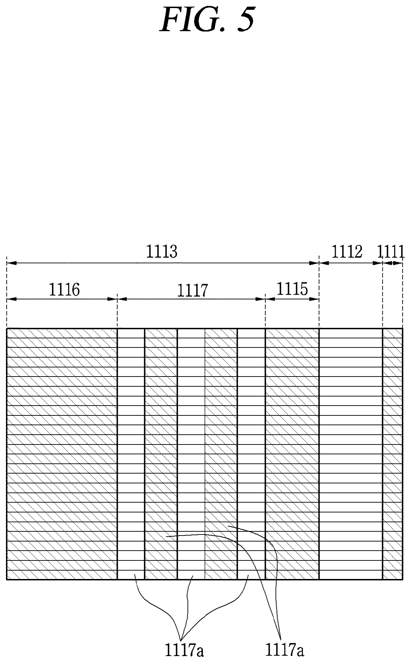

FIG. 3 is an exploded perspective view illustrating a part of a stator core in the stator according to the present disclosure. FIG. 4 is a planar view illustrating a state of rolling the stator core of FIG. 3. FIG. 5 is a cross-sectional view taken along line "V-V" of FIG. 4.

Referring to FIGS. 2 and 3, the engaged portions 1113 according to this embodiment may each include the contact surfaces 1113a and the non-contact surfaces 1113b. The contact surfaces 1113a are portions which are brought in contact with an engaged portion 1113 of adjacent unit yokes 111 adjacent in a circumferential direction, and the non-contact surfaces 1113b are portions that are not in contact with the engaged portion 1113 of the adjacent unit yokes 111 adjacent in a circumferential direction. Accordingly, the non-contact surfaces 1113b are arranged to be recessed by a preset depth into a circumferential side surface of the unit yoke 111 constituting the engaged portion 1113 such that a circumferential height of the non-contact surfaces 1113b is smaller than a circumferential height of the contact surfaces 1113a.

In this case, a radial width D1 of the engaged portion 1113 may be configured to be approximately half a circumferential width D5 of the tooth 112 of the stator core 110. For example, the radial width D1 of the engaged portion 1113 may be configured to be equal to or greater than approximately 0.4 times the circumferential width D5 of the teeth 112. Thus, a magnetic path area in the engaged portion 1113 may be secured even when non-contact surfaces to be described later is arranged in the engaged portion 1113.

Referring to FIGS. 3 to 5, the engaged portion 1113 according to this embodiment may include a first contact section 1115, a second contact section 1116, and a partial contact section 1117. The first contact section 1115 and the second contact section 1116 are sections in which whole contact sections 1115, 1115, 1116, and 1116 corresponding to each other in two adjacent unit yokes 111 and 111 are in contact with each other. The partial contact section 1117 is a section such that only parts of partial contact sections 1117 and 1117 corresponding to each other in the two adjacent unit yokes 111 and 111 are in contact with each other. In other words, a whole of the first contact section 1115 and the second contact section 1116 constitutes contact surfaces (no reference numeral), whereas a part of the partial contact section 1117 constitutes the contact surfaces 1113a and another part thereof constitutes the non-contact surfaces 1113b.

The first contact section 1115 may be arranged on an outer circumferential side with reference to the unit yoke 111. In other words, the first contact section 1115 may be arranged consecutively from an inner end of the hollow portion 1112 along a radial direction. In this case, a radial width D31 of the first contact section 1115 may be configured to correspond to a minimum dimension that allows die punching. For example, the radial width D31 of the first contact section 1115 may be formed equally along the axial direction, but may be configured to be equal to or greater than a radial width D2 of the hollow portion 1112. Accordingly, a magnetic path area in two adjacent first contact sections 1115 may be secured.

The second contact section 1116 may be arranged on an inner circumferential side with reference to the unit yoke 111. In other words, the second contact section 1116 is arranged on a further inner side relative to the first contact section 1115, and a radial width D32 of the second contact section 1116 may be configured to be equal to or greater the radial width D31 of the first contact section 1115. For example, the radial width D32 of the second contact section 1116 may be configured to be equal along the axial direction, and a sum of the radial width D31 of the first contact section1115 and the radial width D32 of the second contact section 1116 may be configured to be approximately 0.3 times or more the circumferential width D5 of the teeth 112. Accordingly, a magnetic path area in two adjacent second contact sections 1116 and 1116 may be secured.

The partial contact section 1117 may be arranged between the first contact section 1115 and the second contact section 1116. In other words, the non-contact surfaces 1113b may be arranged between an inner circumferential side of the first contact section 1115 and an outer circumferential side of the second contact section 1116. Thus, the partial contact section 1117 is arranged in a middle portion of the engaged portion 1113 in the radial direction. Accordingly, engagement reliability and a magnetic path area between the unit cores 110a may be secured, while internal stress generated between the unit cores 110a may be reduced, thereby reducing iron loss.

In this case, a radial width D4 of the partial contact section 1117 is configured to be equal along the axial direction, and equal to or greater than the radial width D31 of the first contact section 1115 or the radial width D32 of the second contact section 1116. For example, the radial width D4 of the partial contact section 1117 may be configured to be smaller than or equal to a sum of the radial width D31 of the first contact section 1115 and the radial width D32 of the second contact section 1116. In the former case, the partial contact section 1117 may be formed to be narrow as possible, thereby securing engagement reliability and a magnetic path area between the unit cores 110a. In the latter case, the partial contact section 1117 may be formed widely as possible to thereby reduce internal stress generated between the unit cores 110a as possible, thereby effectively reducing iron loss. This embodiment shows the former case, i.e., an example in which the radial width D4 of the partial contact section 1117 is configured to be smaller than a sum of the radial width D31 of the first contact section 1115 and the radial width D32 of the second contact section 1116.

In detail, the partial contact section 1117 may be unevenly formed along a radial direction within a range corresponding to the non-contact surfaces 1113b on an end surface of the unit yoke 111, that is, on the engaged portion 1113. For example, the partial contact section 1117 may include a plurality of non-contact grooves 1117a and at least one contact protrusion 1117b. The plurality of non-contact grooves 1117a are portions recessed in the engaged portion 1113 by a preset depth in a circumferential direction to constitute the non-contact surfaces (e.g., the non-contact surfaces 1113b) described above. The at least one contact protrusion 1117b is a portion located between the plurality of non-contact grooves 1117a and protruding radially toward an engaged portion 1113 of an adjacent unit yoke 111 to constitute the contact surfaces (e.g., the contact surfaces 1113a) described above.

In this case, the partial contact section 1117 may be arranged symmetrically in a radial direction with reference to a virtual circle C passing through a radial center of the partial contact section 1117. In other words, the non-contact grooves 1117a and the at least one contact protrusion 1117b both constituting the partial contact section 1117 may be formed identically along the axial direction, and may be configured to have same specifications along the radial direction.

For example, as shown in FIG. 4, three non-contact grooves 1117a having a same shape and a same specification may be arranged to have two contact protrusions 1117b with a same shape and a same specification interposed therebetween. That is, the virtual circle C is arranged to pass through a center of a second non-contact groove 1117a located in a middle in the three non-contact grooves 1117a, and among the three non-contact grooves 1117a, a first non-contact groove 1117a located on an outer circumference side of the virtual circle C and a third non-contact groove 1117a located on an inner circumference side thereof may be arranged to be spaced apart from the virtual circle C by a same distance in the radial direction. The two contact protrusions 1117b described above may be arranged to be spaced apart from the virtual circle C by a same distance in the radial direction. Accordingly, the partial contact section 1117 including the non-contact grooves 1117a and the contact protrusions 1117b may be easily machined. In addition, a magnetic path area between unit yokes 111 may be uniformly generated in the partial contact section 1117 to thereby suppress magnetic flux saturation in the unit yokes 111.

In this case, the non-contact grooves 1117a may be configured to have a size equal to or smaller than that of the hollow portion 1112. In other words, a radial width D42 of at least one non-contact groove 1117a among the plurality of non-contact grooves 1117a may be configured to be equal to or smaller than the radial width D2 of the hollow portion 1112. This may suppress an excessive decrease in a magnetic path area caused by an excessive increase in the radial width D42 of the non-contact grooves 1117a.

Here, the radial width D4 of the partial contact section 1117 may be equal to or greater than approximately 0.2 times the circumferential width D5 of the teeth 112, and the radial width D42 of the non-contact grooves 1117a may be appropriately adjusted according to a number of the non-contact grooves 1117a in the partial contact section 1117. For example, the radial width D42 of the non-contact grooves 1117a may have a value obtained by multiplying, by 0.3 to 0.9, a value acquired as a result of dividing the radial width D4 of the partial contact section 1117 by the number of the non-contact grooves 1117a.

Referring to FIGS. 3 and 4, the non-contact grooves 1117a may have a quadrilateral cross-sectional shape. In other words, the non-contact grooves 1117a may each include a plurality of first side surfaces 1117a1 constituting radial side surfaces and a second side surface 1117a2 constituting a circumferential side surface. The plurality of first side surfaces 1117a1 may be arranged to be parallel with each other on both sides in the radial direction, and the second side surface 1117a2 may be arranged to connect between the plurality of first side surfaces 1117a1 in a straight line. Accordingly, a first side surface 1117b1 defining a height of the contact protrusions 1117b may be configured to have a great length as possible to cause elastic force of the contact protrusions 1117b to be generated greatly as possible. This may cause the elastic force of the contact protrusions 1117b to be relatively increased to thereby effectively reduce internal stress in the partial contact section 1117.

Although not shown in the drawing, the non-contact grooves 1117a may each have a quadrilateral cross-sectional shape, and a corner at which the first side surface 1117b1 and a second side surface 1117b2 meet may be configured as a curved surface to have a predetermined curvature. Accordingly, when the non-contact grooves 1117a are machined using die punching, the non-contact grooves 1117a (and the contact protrusion) may be easily manufactured and a damage to the corner may be suppressed, thereby enhancing reliability.

In this case, the non-contact grooves 1117a may each have a square cross-sectional shape. In other words, a circumferential width D41 of the first side surface 1117b1 defining a depth of each of the non-contact grooves 1117a may be equal to the radial width D42 of the second side surface 1117b2 defining a width of each of the non-contact grooves 1117a. Accordingly, a magnetic path area in the partial contact section 1117 may be properly secured, while internal stress generated in the partial contact portion 1117 may be effectively attenuated.

Although not shown in the drawing, the non-contact grooves 1117a may each have the radial width D42 of the second side surface 1117a2 greater than the circumferential width D41 of the first side surface 1117a1. In other words, the non-contact grooves 1117a may be configured to have a rectangular cross-sectional shape elongated in the radial direction. In this case, since the contact protrusions 1117b may have a small thickness, elastic force of the contact protrusions 1117b may increase. Thus, internal stress in the partial contact section 1117 may be effectively attenuated.

Additionally, as shown in FIGS. 3 and 4, the contact protrusions 1117b may be configured to have a square cross-sectional shape like the non-contact grooves 1117a. In other words, the contact protrusions 1117b may be configured such that a circumferential width D43 defining a length (i.e., protrusion height) of the first side surface 1117b1 is identical to a radial width D44 defining a length (i.e., protrusion width) of the second side surface 1117b2. Accordingly, a magnetic path area in the partial contact section 1117 may be properly secured, while internal stress generated in the partial contact portion 1117 may be effectively attenuated.

Although not shown in the drawing, the radial width D44 constituting a width of each of the contact protrusions 1117b may be formed to be greater than the circumferential width D43 constituting a height of each of the contact protrusions 1117b. In other words, the contact protrusions 1117b may be configured to have a rectangular cross-sectional shape elongated in the radial direction. In this case, a large magnetic path area may be secured.

As described above, when the engaged portion 1113 includes the contact surfaces 1113a and the non-contact surface 1113b, internal stress generated when engaged portions 1113 of two adjacent unit yokes 111 are in close contact with each other in a process of folding between unit yokes 111 of the stator core 110 configured as a folding-type core may be attenuated. This may reduce iron loss caused by internal stress in the unit yokes 111, thus enhancing motor efficiency (or motor performance). In other words, since the non-contact grooves 1117a that are not in contact with each other are arranged in the engaged portions 1113 in which two adjacent unit yokes 111 are engaged with each other, the contact protrusions 1117b having elastic force are arranged between the non-contact grooves 1117a, thereby absorbing and attenuating internal stress generated in the engaged portions 1113. Then, the internal stress generated in the engaged portions 1113 of the two adjacent unit yokes 111 is attenuated, thereby reducing iron loss caused by the internal stress.

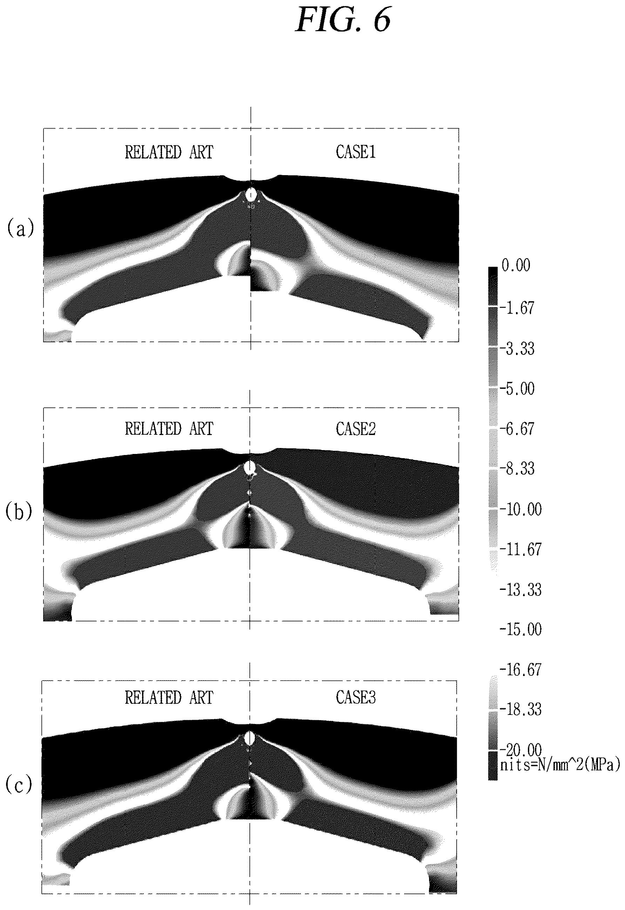

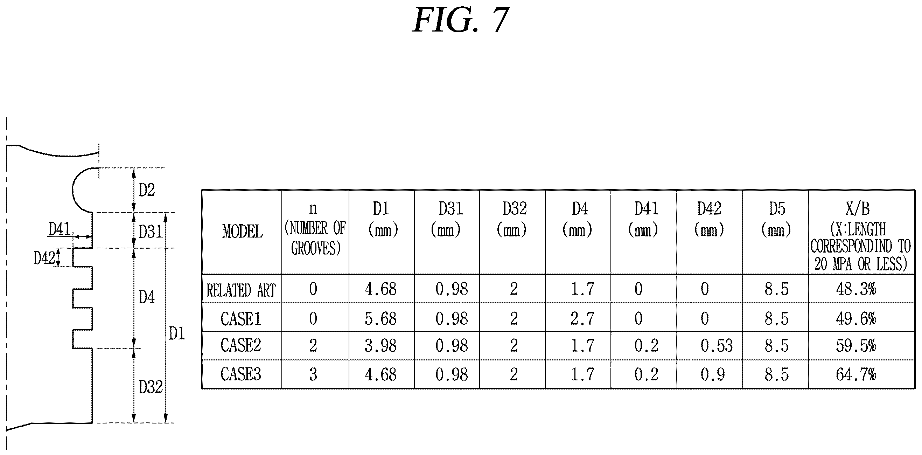

FIG. 6 is a simulation drawing showing a result of comparing an internal stress distribution in an engaged portion of the stator core according to the present embodiment to an internal stress distribution in the related art. FIG. 7 shows a table in which simulation results of FIG. 6 are arranged.
(a) of FIG. 6 is a simulation drawing showing a comparison between an internal stress distribution in a case (case ①) when the engaged portion 1113 includes only the contact surface 1113a and a radial width D1 of the engaged portion 1113, i.e., an area of the engaged portion 1113 is increased, and an internal stress distribution in a case of the related art in which a non-contact surface is not present. The drawing shows a result in which internal stress in the case ① is slightly reduced compared to internal stress in the related art. This result is also shown in FIG. 7. That is, in the case ①, it may be understood that a stress relieving rate has improved by approximately 1.3 % under such a condition that the radial width D1 of the engaged portion 1113 is increased by approximately 1 mm, compared to an engaged portion in the related art. In the case ①, it may be understood that internal stress is relatively reduced when the area of the engaged portion 1113 increases, but since an effective area of the slot 114 which is a coil winding space decreases in correspondence with an increase in the radial width D1 of the engaged portion 1113, a space factor of a coil may be reduced.
(b) of FIG. 6 is a simulation drawing showing a comparison between an internal stress distribution in a case (case ②) when the engaged portion 1113 includes two non-contact surface 1113b and a case of the related art in which a non-contact surface is not present. The drawing shows a result in which internal stress in the case ② is significantly reduced compared to internal stress in the related art. This result is also shown in FIG. 7. That is, in the case ②, it may be understood that a stress relieving rate has improved by approximately 11.2% under a condition that the radial width D1 of the engaged portion 1113 is identical to that in the related art. In other words, in the case ②, it may be understood that since two non-contact grooves 1117a and one contact protrusion 1117b are arranged in the engaged portion 1113, elastic force in the engaged portion 1113 increases, thereby attenuating internal stress.
(c) of FIG. 6 is a simulation drawing showing a comparison between an internal stress distribution in a case when the engaged portion 1113 includes three non-contact surfaces 1113b (case ③\) and a case of the related art in which a non-contact surface is not present. The drawing shows a result in which internal stress in the case ③ is further significantly reduced compared to internal stress in the related art. This result is also shown in FIG. 7. That is, in the case ③, it may be understood that a stress relieving rate has improved by approximately 16.4% under a condition that the radial width D1 of the engaged portion 1113 is identical to that in the related art. In other words, in the case ③, it may be understood that since three non-contact grooves 1117a and two contact protrusions 1117b are arranged in the engaged portion 1113, elastic force in the engaged portion 1113 is further increased, thereby further attenuating internal stress.

As such, since a non-contact surface is arranged in an engaged portion in which two adjacent unit yokes are engaged with each other, among unit yokes of a stator core configured as a folding-type core, internal stress that may occur when the two adjacent engaged portions come into close contact with each other in a process of folding the two adjacent unit yokes may be attenuated. This may minimize a reduction in a magnetic path area in a unit yoke while suppressing iron loss caused by internal stress in the unit yoke, thereby improving motor efficiency and/or motor performance.

Meanwhile, another embodiment of an engaged portion will be described.

That is, in the above-described embodiment, non-contact grooves and/or contact protrusions both constituting a partial contact section in an engaged portion have a first side surface with a same length as that of a second side surface thereof. However, in some cases, non-contact grooves and/or contact protrusions may have a first side surface with a length greater than that of a second side surface thereof.

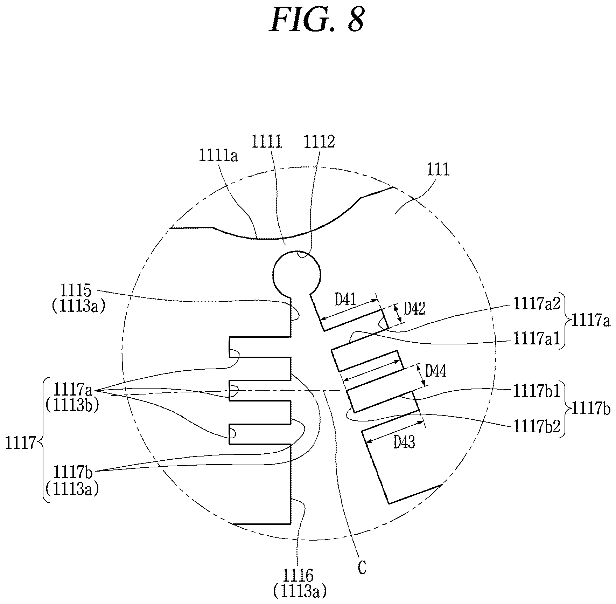

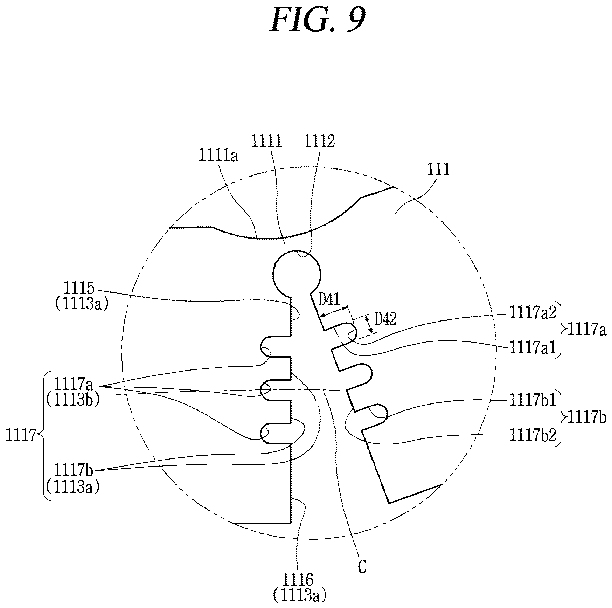

FIGS. 8 and 9 are schematic diagrams illustrating other embodiments of an engaged portion.

Referring back to FIG. 3, a basic configuration of the stator core 110 according to this embodiment and operational effects resulting therefrom may be almost identical to those in the embodiment described above. For example, the stator core 110 may be configured such that the plurality of unit yokes 111 are connected to each other to constitute a type of folding-type core. In this case, the engaged portion 1113 is arranged at both ends of each unit yoke 111 to be engaged with an adjacent unit yoke 111, and the engaged portions 1113 may each include the first contact section 1115 on an outer circumference side, the second contact section 1116 on an inner circumference side, and the partial contact section 1117 between the first and second contact sections 1115 and 1116 on the both sides. The partial contact section 1117 may include the plurality of non-contact surfaces 1113b configured as the non-contact grooves 1117a and at least one contact surface 1113a configured as a contact protrusion 1117b. Accordingly, when the connection portion 1111 between two adjacent unit yokes 111 is bent and rolled, internal stress generated in the engaged portions 1113 of the two adjacent unit yokes 111 may be attenuated. This may reduce iron loss generated in the engaged portions 1113 of the unit yokes 111 and enhance motor efficiency.

However, as shown in FIG. 8, in this embodiment, the non-contact grooves 1117a may each have a depth greater than a depth of each of the non-contact grooves 1117a in the above-described embodiment. Thus, the contact protrusion 1117b according to this embodiment has a height greater than a height of the contact protrusion 1117b in the above-described embodiment. In correspondence with this, elastic force of the contact protrusion 1117b may be increased. This may reduce internal stress that occurs in the two adjacent engaged portions 1113 and iron loss resulting from the internal stress, thereby enhancing motor efficiency.

In detail, with respect to the non-contact grooves 1117a according to this embodiment, a circumferential width D41 of each of the first side surface 1117a1 defining a depth of the non-contact grooves 1117a may be greater than a radial width D42 of the second side surface 1117b2 defining a width of the non-contact grooves 1117a. For example, the non-contact grooves 1117a may each have the circumferential width D41 approximately twice or more the radial width D42. Accordingly, the non-contact groove 1117a may have a rectangular cross-sectional shape recessed further deeply in a circumferential direction than in a radial direction.

In a case when the non-contact grooves 1117a extend in the circumferential direction as described above, the contact protrusion 1117b corresponding to the non-contact grooves 1117a may also have a rectangular cross-sectional shape extending in the circumferential direction. Accordingly, as described above, elastic force in the contact protrusion 1117b may be increased, thereby attenuating internal stress in the engaged portion 1113. This may reduce iron loss in the engaged portion 1113, and correspondingly, motor efficiency may be improved.

In this case, the second side surface 1117a2 defining a circumferential side surface of each of the non-contact grooves 1117a may be configured as a straight line as shown in FIG. 8, but in some cases, may be configured as a curved line as shown in FIG. 9. As shown in FIG. 9, in a case when the second side surface 1117b2 of the non-contact groove 1117a is configured as a curved surface, a corner between the first side surface 1117b1 and the second side surface 1117b2 may be connected as a curved surface. Accordingly, since a magnetic path on the non-contact surface 1113 may be smoothly generated, a bottleneck phenomenon of a magnetic flux may be alleviated, thereby improving motor efficiency. Additionally, when the non-contact groove 1117a is machined using die punching, reliability of die and/or cores may be improved.

Although not shown in the drawing, the second side surface 1117a2 may have a wedge cross-sectional shape. This may be advantageous in terms of motor efficiency and reliability compared to a case when the second side surface 1117b2 is configured as a right-angled surface relative to the first side surface 1117b1.

Meanwhile, still another implementation of an engaged portion will be described.

That is, in the embodiments described above, both first side surfaces of a non-contact groove and a contact protrusion both constituting a partial contact section in an engaged portion are arranged to be parallel with each other. However, in some cases, first side surfaces of a non-contact groove and/or a contact protrusion may be configured as a curved surface.

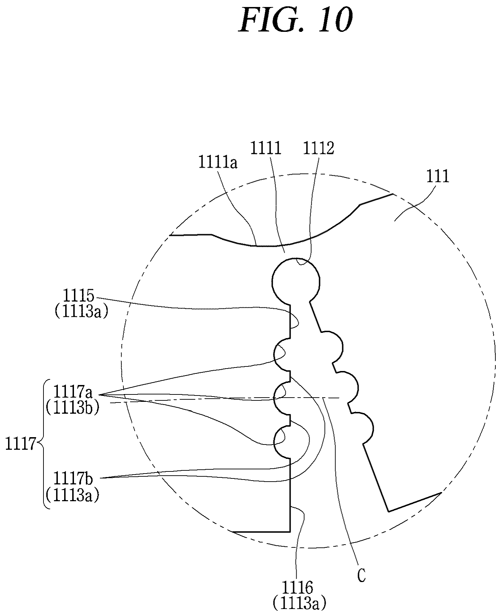

FIG. 10 is a schematic diagram illustrating still another embodiment of an engaged portion.

Referring back to FIG. 3, a basic configuration of the stator core 110 according to this embodiment and operational effects resulting therefrom may be almost identical to those in the embodiment described above. For example, the stator core 110 may be configured such that the plurality of unit yokes 111 are connected to each other to constitute a type of folding-type core. In this case, the engaged portion 1113 is arranged at both ends of each unit yoke 111 to be engaged with an adjacent unit yoke 111, and the engaged portions 1113 may each include the first contact section 1115 on an outer circumference side, the second contact section 1116 on an inner circumference side, and the partial contact section 1117 between the first and second contact sections 1115 and 1116 on the both sides. The partial contact section 1117 may include the plurality of non-contact surfaces 1113b configured as the non-contact grooves 1117a and at least one contact surface 1113a configured as a contact protrusion 1117b. Accordingly, when the connection portion 1111 between two adjacent unit yokes 111 is bent and rolled, internal stress generated in the engaged portions 1113 of the two adjacent unit yokes 111 may be attenuated. This may reduce iron loss generated in the engaged portions 1113 of the unit yokes 111 and enhance motor efficiency.

However, as shown in FIG. 10, in this embodiment, a radial side surface and a circumferential side surface of each of the non-contact grooves 1117a may be each configured as a curved surface. For example, the non-contact grooves 1117a may have a hemispherical shape. In this case, the radial side surface of the contact protrusion 1117b defining each of the contact surfaces 1113a may be configured as a straight surface. Thus, the non-contact grooves 1117a and the contact protrusion 1117b may be connected to each other in a curved line. Accordingly, a magnetic path in the engaged portion 1113 may be smoothly generated. This may alleviate a bottleneck of magnetic flux on the non-contact surfaces 1113b, thereby improving motor efficiency, and further improving reliability of die and/or cores when the non-contact groove 1117a is machined using die punching.

Although not shown in the drawing, in this case, the non-contact grooves 1117a may have a wedge cross-sectional shape. In this case, motor efficiency and reliability may be also improved depending on a depth each of the non-contact grooves 1117a.

Meanwhile, still another implementation of an engaged portion will be described.

That is, in the embodiments described above, the partial contact section is arranged symmetrically in a radial direction. However, in some cases, the partial contact section may be arranged asymmetrically in a radial direction.

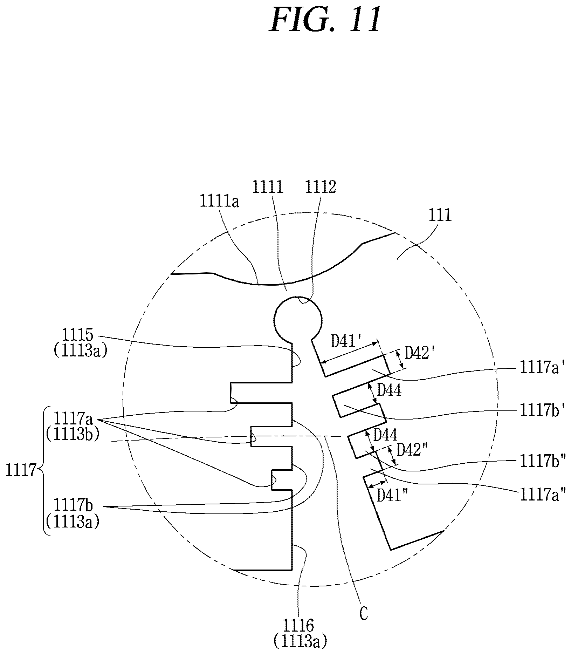

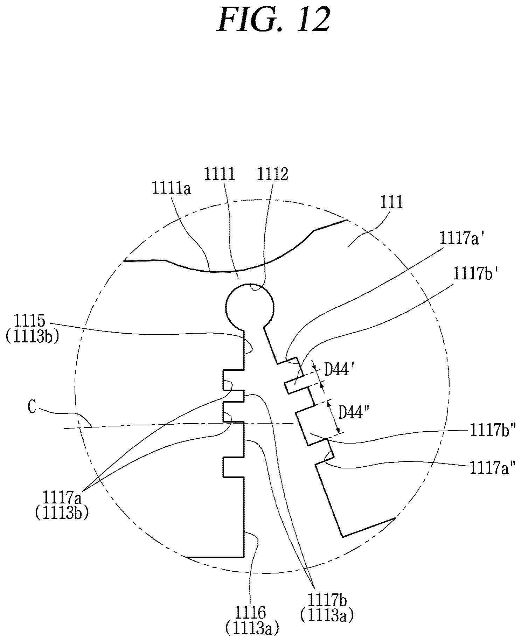

FIGS. 11 and 12 are schematic diagrams illustrating still another embodiment of an engaged portion.

Referring back to FIG. 3, a basic configuration of the stator core 110 according to this embodiment and operational effects resulting therefrom may be almost identical to those in the embodiment described above. For example, the stator core 110 may be configured such that the plurality of unit yokes 111 are connected to each other to constitute a type of folding-type core. In this case, the engaged portion 1113 is arranged at both ends of each unit yoke 111 to be engaged with an adjacent unit yoke 111, and the engaged portions 1113 may each include the first contact section 1115 on an outer circumference side, the second contact section 1116 on an inner circumference side, and the partial contact section 1117 between the first and second contact sections 1115 and 1116 on the both sides. The partial contact section 1117 may include the plurality of non-contact surfaces 1113b configured as the non-contact grooves 1117a and at least one contact surface 1113a configured as a contact protrusion 1117b. Accordingly, when the connection portion 1111 between two adjacent unit yokes 111 is bent and rolled, internal stress generated in the engaged portions 1113 of the two adjacent unit yokes 111 may be attenuated. This may reduce iron loss generated in the engaged portions 1113 of the unit yokes 111 and enhance motor efficiency.

However, as shown in FIG. 11, the plurality of non-contact grooves 1117a according to this embodiment may increase elastic force in a portion in which great internal stress is generated to thereby increase an iron loss reduction rate in a same magnetic path area. For example, the plurality of non-contact grooves 1117a may be configured to have varying circumferential depths along a radial direction. In other words, among three non-contact grooves 1117a, a circumferential width D41' of a first non-contact groove 1117a' adjacent to the first contact section 1115 may be configured to be greatest, and a circumferential width D41" of a third non-contact groove 1117a" adjacent to the second contact section 1116 may be configured to be smallest. Then, among two contact protrusions 1117b, a circumferential width D41' defining a height of a first contact protrusion 1117b' located on an outer circumferential side may be configured to be greater than a circumferential width D41" defining a height of a second contact protrusion 1117b" located on an inner circumferential side. Accordingly, in the partial contact section 1117, internal stress may be more effectively attenuated in a portion where internal stress is relatively great, i.e., in a portion of the partial contact section 1117 on an outer circumferential side in a periphery of the hollow portion 1112. Thus, even when a whole radial width D44 of each of the contact protrusions 1117b defining a magnetic path in the partial contact sections 1117 is identical, overall iron loss is reduced. In correspondence with this, motor efficiency may be improved.

Additionally, as shown in FIG. 12, radial widths D44 of the plurality of contact protrusions 1117b may vary along a radial direction. In other words, the three non-contact grooves 1117a may have a same circumferential width D41 and a same radial width D42, and two contact protrusions 1117b may have varying radial widths D44. Then, among the two contact protrusions 1117b, a radial width D44' of the first contact protrusion 1117b' located on the outer circumferential side may be greater than a radial width D44" of the second contact protrusion 1117b" located on the inner circumferential side. Accordingly, in the partial contact section 1117, internal stress may be more effectively attenuated in a portion where internal stress is relatively great, i.e., in a portion of the partial contact section 1117 on an outer circumferential side in a periphery of the hollow portion 1112. Thus, even when a whole radial width D44 of each of the contact protrusions 1117b defining a magnetic path in the partial contact sections 1117 is identical, overall iron loss is reduced. In correspondence with this, motor efficiency may be improved.

Although not shown in the drawing, the circumferential width D41 and D43 and/or the radial widths D42 and D44 of the plurality of non-contact grooves 1117a and/or the contact protrusions 1117b may be formed differently from each other along the radial direction. In this case, elastic force of the contact protrusion 1117b adjacent to the hollow portion 1112 may be configured to be greater than elastic force of the contact protrusion 1117b positioned away from the hollow portion 1112. Accordingly, internal stress in the partial contact section 1117 may be reduced, thereby reducing iron loss and improving motor efficiency.

Meanwhile, still another implementation of an engaged portion will be described.

That is, in the embodiments described above, a plurality of non-contact grooves are arranged in a partial contact section, but in some cases, only one non-contact groove may be arranged in the partial contact section.

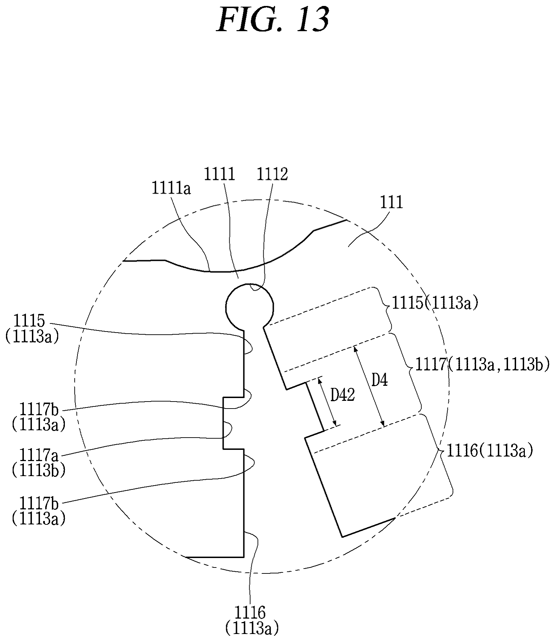

FIG. 13 is a schematic diagram illustrating still another embodiment of an engaged portion.

Referring back to FIG. 3, a basic configuration of the stator core 110 according to this embodiment and operational effects resulting therefrom may be almost identical to those in the embodiment described above. For example, the stator core 110 may be configured such that the plurality of unit yokes 111 are connected to each other to constitute a type of folding-type core. In this case, the engaged portion 1113 is arranged at both ends of each unit yoke 111 to be engaged with an adjacent unit yoke 111, and the engaged portions 1113 may each include the first contact section 1115 on an outer circumference side, the second contact section 1116 on an inner circumference side, and the partial contact section 1117 between the first and second contact sections 1115 and 1116 on the both sides. The partial contact section 1117 may include the plurality of non-contact surfaces 1113b configured as the non-contact grooves 1117a and at least one contact surface 1113a configured as a contact protrusion 1117b. Accordingly, when the connection portion 1111 between two adjacent unit yokes 111 is bent and rolled, internal stress generated in the engaged portions 1113 of the two adjacent unit yokes 111 may be attenuated. This may reduce iron loss generated in the engaged portions 1113 of the unit yokes 111 and enhance motor efficiency.

However, as shown in FIG. 13, the partial contact section 1117 according to this embodiment may be arranged between the first contact section 1115 and the second contact section 1116, and one non-contact groove 1117a may be arranged in the partial contact section 1117. In this case, the radial width D42 of the non-contact groove 1117a may be configured to be equal to the radial width D4 of the partial contact section 1117, or may be configured to be smaller than the radial width D4 of the partial contact section 1117. In the former case, a non-contact area between two adjacent engaged portions 1113 and 1113 may increase, thereby enhancing an effect of reducing internal stress through stress isolation. In the latter case, a decrease in motor efficiency may be suppressed as possible by securing a magnetic path area while reducing internal stress. This embodiment shows the latter case, that is, an example in which contact protrusions 1117b and 1117b are arranged on both sides of the non-contact groove 1117a to extend from the first and second contact sections 1115 and 1116, respectively.

For example, the partial contact section 1117 according to this embodiment may be configured such that contact protrusions 1117b and 1117b constituting a part of the partial contact section 1117 extend from the first contact section 1115 and the second contact section 1116, respectively, and the non-contact groove 1117a constituting another part of the partial contact section 1117 may be arranged between the contact protrusions 1117b and 1117b on both sides. It may be understood that the contact protrusions 1117b and 1117b on both sides constitute parts of the first contact section 1115 and the second contact section 1116, respectively, and as a result, a substantial radial width of the first contact section 1115 and a substantial radial width of the second contact section 1116 increase. Accordingly, as an area of the non-contact groove 1117a which constitutes the non-contact surface 1113b in the partial contact sections 1117 is reduced, internal stress may be reduced due to the non-contact surface 1113a, and a magnetic path area may be secured widely as possible. Thus, deterioration of motor performance due to the non-contact surface 1113a may be suppressed to minimum.

Although not shown in the drawing, one non-contact groove 1117a and one contact protrusion 1117b may be arranged. In other words, one contact protrusion 1117b may extend from one of the first contact section 1115 and the second contact section 1116, one non-contact groove 1117a may be arranged to be connected to one side of the one contact protrusion 1117b, and another of the first and second contact sections 1115 and 1116 may be connected to one side of the one non-contact groove 1117a. In this case, like the embodiment described above with reference to FIG. 13, since the non-contact surface 1113b is arranged in the engaged portion 1113, internal stress is reduced. Thus, iron loss may be lowered, and simultaneously, a large magnetic path area may be secured as possible to thereby suppress deterioration of motor performance.

## Claims

1. A stator of a motor, the stator comprising a stator core (110) formed in an annular shape by integrally connecting a plurality of unit yokes (111) arranged in a row,
wherein each of the plurality of unit yokes (111) comprises connecting portions (1111) located on both circumferential ends to be integrally connected to adjacent unit yokes (111), hollow portions (1112) recessed into inner circumferential sides of the respective connecting portions (1111) in a circumferential direction, and engaged portions (1113) arranged on inner circumferential sides of the respective hollow portions (1112) and engaged with the adjacent unit yokes (111), and
wherein each of the engaged portions (1113) comprises:
a contact surface (1113a) in contact with an engaged portion (1113) of another unit yoke (111) adjacent in the circumferential direction; and
at least one non-contact surface (1113b) arranged to be lower than the contact surface (1113a) in the circumferential direction not to be in contact with the engaged portion (1113) of the another unit yoke (111) adjacent in the circumferential direction.

2. The stator of claim 1, wherein each of the engaged portions (1113) comprises:
a first contact section (1115) arranged on an outer circumferential side;
a second contact section (1116) arranged on a further inner circumferential side relative to the first contact section (1115); and
a partial contact section (1117) arranged between the first contact section (1115) and the second contact section (1116), and
wherein a radial width (D4) of the partial contact section (1117) is equal to or greater than a radial width (D31) of the first contact section (1115) or a radial width (D32) of the second contact section (1116).

3. The stator of claim 2, wherein the radial width (D4) of the partial contact section (1117) is smaller than or equal to a sum of the radial width (D31) of the first contact section (1115) and the radial width (D32) of the second contact section (1116).

4. The stator of claim 1, wherein each of the engaged portions (1113) comprises:
a first contact section (1115) arranged on an outer circumferential side;
a second contact section (1116) arranged on a further inner circumferential side relative to the first contact section (1115); and
a partial contact section (1117) arranged between the first contact section (1115) and the second contact section (1116), and
wherein the at least one non-contact surface (1113b) is arranged within a radial range of the partial contact section (1117).

5. The stator of claim 4, wherein the partial contact section (1117) comprises at least one non-contact groove (1117a) circumferentially recessed into each of the engaged portions (1113) by a preset depth to constitute the at least one non-contact surface (1113b).

6. The stator of claim 4 or 5, wherein the at least one non-contact groove (1117a) has a radial width (D42) equal to a circumferential width (D41) thereof, or has a radial width (D42) smaller than a circumferential width (D41) thereof.

7. The stator of any one claims 4 to 6, wherein the at least one non-contact groove (1117a) comprises a plurality of first side surfaces (1117a1) arranged on both sides to be parallel to each other in a radial direction, and a second side surface (1117a2) connecting between the plurality of first side surfaces (1117a1), and
the second side surface (1117a2) is formed as a straight line or a curved surface.

8. The stator of any one claims 4 to 6, wherein the at least one non-contact groove (1117a) has a hemispherical shape, respectively.

9. The stator of any one claims 4 to 8, wherein the partial contact section (1117) is formed to be symmetrical in a radial direction with respect to a virtual circle (C) passing through a radial center of the partial contact section (1117).

10. The stator of any one claims 4 to 8, wherein the partial contact section (1117) is formed to be asymmetrical in a radial direction with respect to a virtual circle (C) passing through a radial center of the partial contact section (1117).

11. The stator of claim 1, wherein each of the engaged portions (1113) comprises:
a first contact section (1115) arranged on an outer circumferential side;
a second contact section (1116) arranged on a further inner circumferential side relative to the first contact section (1115); and
a partial contact section (1117) arranged between the first contact section (1115) and the second contact section (1116), and
wherein the partial contact section (1117) comprises:
a plurality of non-contact grooves (1117a) circumferentially recessed into each of the engaged portions (1113) by a preset depth to constitute the at least one non-contact surface (1113b); and
at least one contact protrusion (1117b) radially protruding toward the engaged portion (1113) of the another unit yoke (111) between the plurality of non-contact grooves (1117a) to constitute the contact surface (1113a).

12. The stator of claim 11, wherein, among the plurality of non-contact grooves (1117a), a non-contact groove (1117a) located on an outer circumferential side of each of the plurality of unit yokes (111) with respect to a virtual circle (C) passing through a radial center of the partial contact section (1117) has a radial width (D42') and/or a circumferential width (D41') greater than a radial width (D42") and/or a circumferential width (D41") of a non-contact groove (1117a) located on an inner circumferential side of each of the plurality of unit yokes (111).

13. The stator of claim 11 or 12, wherein the plurality of non-contact grooves (1117a) each have an identical shape, and
the at least one contact protrusion (1117b) has a shape identical to the shape of each of the plurality of non-contact grooves (1117a).

14. The stator of claim 11, wherein the at least one contact protrusion (1117b) comprises a plurality of contact protrusions, and
the plurality of contact protrusions (1117b) each have an identical shape.

15. The stator of any one of claims 1 to 14, wherein a radial width (D41) of the at least one non-contact surface (1113b) is smaller than or equal to a radial width (D2) of each of the hollow portions (1112).
